Europäisches Patentamt

European Patent Office

Office européen des brevets

(11) Publication number: **0 274 222 B1**

# EUROPEAN PATENT SPECIFICATION

(45) Date of publication of patent specification: **03.03.93**   (51) Int. Cl.⁵: **G02B 6/42**, G02B 6/44

(21) Application number: **87310670.2**

(22) Date of filing: **03.12.87**

(54) **Optical fiber feedthrough.**

(30) Priority: **05.12.86 GB 8629158**
**17.07.87 US 74791**

(43) Date of publication of application:
**13.07.88 Bulletin 88/28**

(45) Publication of the grant of the patent:
**03.03.93 Bulletin 93/09**

(84) Designated Contracting States:
**AT BE CH DE ES FR GB GR IT LI LU NL SE**

(56) References cited:
**EP-A- 0 148 012**
**FR-A- 2 504 693**

**PATENT ABSTRACTS OF JAPAN, vol. 6, no.
132 (E-119)[1010], 17th July 1982; & JP-A-57
58 369**

**PATENT ABSTRACTS OF JAPAN, vol. 6, no.
132 (E-119)[1010], 17th July 1982; & JP-A-57
58 371**

(73) Proprietor: **BT&D TECHNOLOGIES LIMITED
Whitehouse Road
Ipswich Suffolk IP1 5PB(GB)**

(72) Inventor: **Hodgson, Michael John
15 Coronation Road
Ipswich Suffolk IP4 5EN(GB)**
Inventor: **Smith, David Robert
10 Harriers Walk
Easton, Woodbridge Suffolk IP13 0HA(GB)**
Inventor: **MacDonald, Brian Michael
77 Links Avenue
Felixstowe Suffolk IP11 9HE(GB)**
Inventor: **Abbott, Kathleen Sue
1 Doe Run Court No. 3B2
Wilmington Delaware 19808(US)**

(74) Representative: **Wolff, Eric
BT&D Technologies Ltd Whitehouse Road
Ipswich, Suffolk IP1 5PB (GB)**

**Description**

FIELD OF THE INVENTION

This invention relates to feedthrough of optical fibers and in particular but not exclusively to feedthrough into device packages.

DESCRIPTION OF THE PRIOR ART

Device packages that incorporate an optical or opto-electronic component have an aperture for the feedthrough of the optical fibers that conduct light to or from the package. It has been usual practice to support the connecting portion of the fibers in a metal sleeve and then for the sleeve to be mounted in the aperture, the fibers being held in the sleeve by a metal solder or epoxy resin.

If a fiber is to be soldered into the sleeve it is necessary to metallize the fiber so that the metal solder will adhere to the fiber and the additional handling of the delicate fiber during the metallization process can cause damage, especially to the end of the fiber which in some instances will already have been provided with a lens. The lensing process cannot be performed easily after metallization because the proximity of a metal surface tends to interfere with the arc discharge technique generally employed. Also, metal solder is subject to creep and this can lead to loss of alignment of the fiber to the optical or opto-electronic device, and over the course of time it may even creep sufficiently to cause loss of hermetic sealing between the fiber and sleeve.

On the other hand if the epoxy resin is used to hold the optical fibres in position there is a slow release of gases from the resin (even after heat treatment) and the gases that are discharged can be harmful to components within the package. A further problem which is encountered with both metal solder and epoxy resin is that the fibre may not be concentric with the sleeve and therefore the precise position of the fibre may not be known so that once the sleeve has been aligned it is necessary to perform compensating adjustments in order to ensure alignment of the optical fibre with the optical-electronic or optical component in the package.

JP-A-57-58371 discloses an assembly in which an optical fibre is hermetically sealed within a cylindrical sleeve, the cylindrical sleeve being composed of a metal pipe such as Kovar, etc. sealed by optically transparent material such as soft glass, etc. at an end which is introduced into the interior of a package, and the pipe and the package are sealed by lead solderglass, etc.

The present invention is directed towards providing such an hermetic seal between an optical fibre and a feedthrough sleeve utilizing glass solder.

SUMMARY OF THE INVENTION

Accordingly the present invention provides an optical fibre feedthrough comprising a metallic sleeve, an optical fibre in the sleeve and a glass seal between the optical fibre and the sleeve forming a fibre to glass sealing interface at the fibre surface and a glass to metal sealing interface at the inner surface of the sleeve, characterised in that:

the materials and dimensions of the glass seal and the metallic sleeve are selected to have predetermined thermal expansion properties such that after heating the assembly to a predetermined temperature and then cooling to form as sealing interfaces any residual stresses in the glass seal in the radial, circumferential, and axial directions are largely compressive, thereby limiting the susceptibility of the glass seal to the propagation of cracks.

The invention also provides a method of sealing optical fibres in a feedthrough comprising comprising threading an optical fibre through a sleeve, disposing a sufficient quantity of glass solder with a lower glass transition temperature than the fibre in at least a portion of the sleeve and heating the glass solder so that it forms a glass seal having a glass to fibre sealing interface at the fibre surface and a glass to metal interface at the surface of the sleeve, characterised in that:

the materials and dimensions of the glass seal and metallic sleeve are selected to have predetermined thermal expansion properties such that after heating the assembly to a predetermined temperature and then cooling to form the sealing interfaces any residual stresses in the glass seal in the radial, circumferential, and axial directions are largely compressive, thereby limiting the susceptibility of the glass seal to the propagation of cracks.

BRIEF DESCRIPTION OF THE DRAWINGS

The invention is now described by way of example with reference to the accompanying drawings in which:

Figure 1 is a schematic cross sectional view through a first embodiment of the invention;

Figure 2 is a schematic cross sectional view through a second embodiment of the invention;

Figure 3 shows a modification to the embodiment of Figure 2, and Figures 4 and 5 show respectively, the embodiment of Figure 2 before and during heating.

Figure 6 shows an alternate embodiment of a thermal conduction member.

DETAILED DESCRIPTION OF THE INVENTION

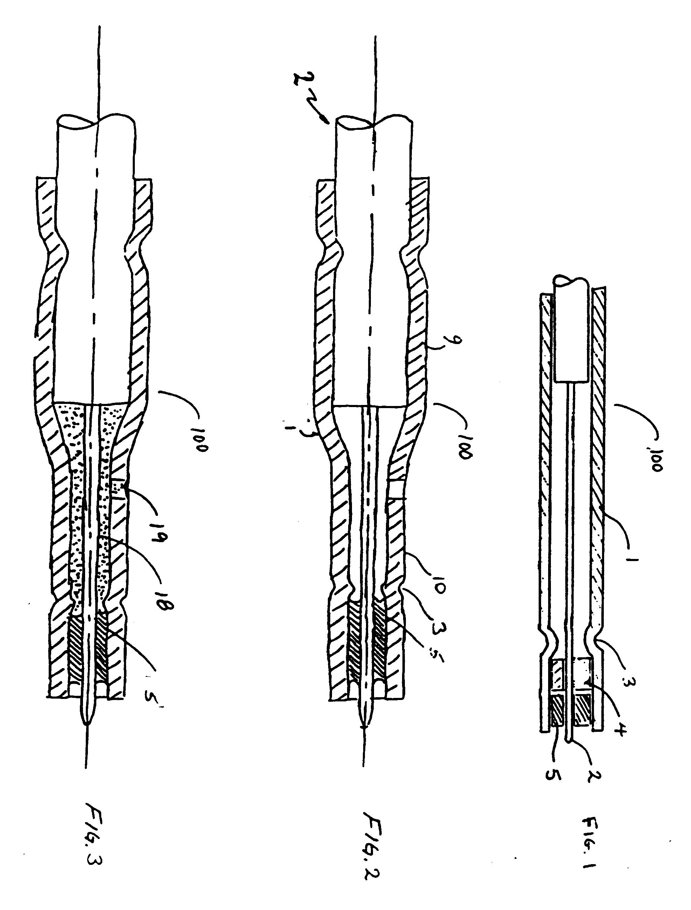

Referring to Figure 1, a feedthrough assembly generally indicated by reference character 100 comprises an outer metallic sleeve 1 through which an optical fiber 2 of silica glass is threaded. The inner surface of the sleeve 1 is provided with at least one inward protrusion close to one end of the sleeve which constricts the sleeve and which can be formed conveniently by dimpling the sleeve 1 from the outside by pressing a point into the sleeve wall to form a deformation. In the drawing a pair of dimples 3 are illustrated. The fiber 2 is threaded through the sleeve 1 so that its termination protrudes a short distance beyond the dimpled end of the sleeve. Prior to insertion into the sleeve 1 the fiber 2 is stripped of any protective coatings and, if appropriate, the end may be formed into a lens. The sleeve 1 is then slid over the fiber 2 so that a short length of inner protective coating, for example about 3mm, extends into the sleeve 1 at the end remote from the dimples 3. Alternatively the sleeve 1 may be placed over the fiber 2 first and slid away from the end of the fiber, the fiber then being stripped and terminated and the sleeve 1 slid back to adopt the position illustrated in the drawing.

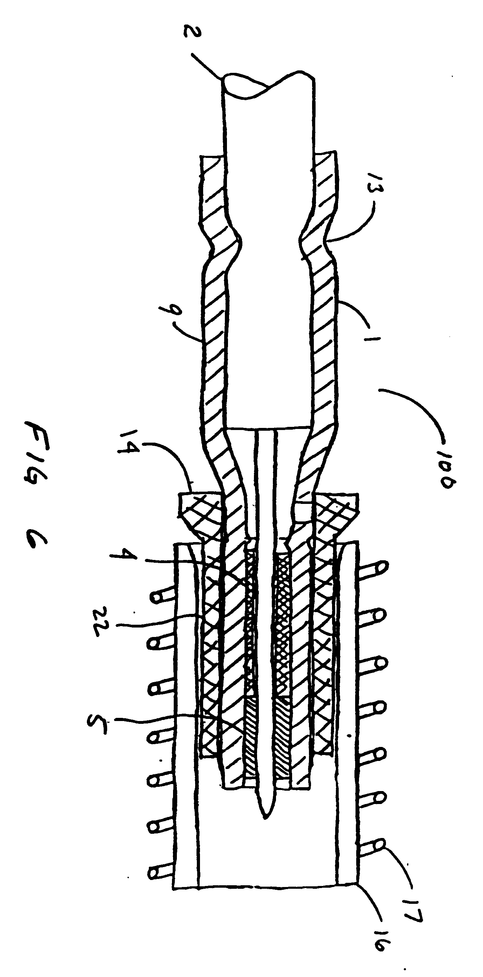

A spacer 4 consisting of an annular member of brass, silica glass or other suitable material is threaded on to the stripped fiber 2 and abuts the dimples 3 for positive location, and adjacent to the spacer 4 a preform 5 of glass solder is also located on the fiber 2. During a subsequent heat treatment the glass solder is heated to its flow temperature so that it forms a seal between the fiber 2 and the sleeve 1. In the positions illustrated in the drawing the glass solder will also seal to the spacer 4, or at least trap the spacer. However, it is also possible to form a seal without using a spacer or with the positions of the spacer and preform reversed. In the latter case if the spacer 4 is made of a material that is not adhered to by glass solder or if it is coated with graphite, for example, then the spacer can be removed after the heat treatment. When the preform 5 is positioned next to the dimples 3 the dimples act to locate the preform 5 and also tend to retain the glass solder to the end region of the sleeve 1 when it flows during heating. It should be understood that while in the embodiment of Figure 1 the dimples 3 are used to locate the spacer (or the preform) alternate arrangements may be used to locate these members. Use of a spacer 4 ensures that the fiber 2 is retained in a fixed spatial arrangement within the sleeve 1 during the flow stage of the glass solder. That is to say, the spacer 4 serves to radially center the fiber 2 with respect to the inner diameter of the sleeve 1 during the flow stage of the solder. In this regard it is the position of the end of the fiber that is most important and therefore to have the spacer immediately adjacent the fiber end may be advantageous. Alternatively, or in addition, an external thermal conduction member 14 (Figure 5) may be used as described later herein.

Various types of glass may be chosen for the glass solder. Generally it is desired to achieve flow at one of the lower temperatures possible to avoid fiber embrittlement and because there are other components (including acrylic coatings further along the fiber) that cannot withstand high temperatures. In order to minimize heat transfer along the fiber and sleeve the sleeve is preferably held in contact with a heat sink. A glass solder preform with a flow temperature (i.e., glass transition temperature $T_G$) in the range of 400°C to 480°C is preferred for use in the invention. Flow may be achieved at lower temperatures with some glasses but the time taken for sufficient flow becomes longer.

The heat treatment for the glass solder preferably consists of heating the sleeve 1 held in an upright position until the glass solder flows into sealing contact with the fiber and sleeve. The sleeve need not be held upright, but this is generally preferred in order to form an even seal. It is envisaged that glass solder could be introduced to the sleeve in a form other than a preform, especially when an internal spacer is used as this also forms a stop within the tube.

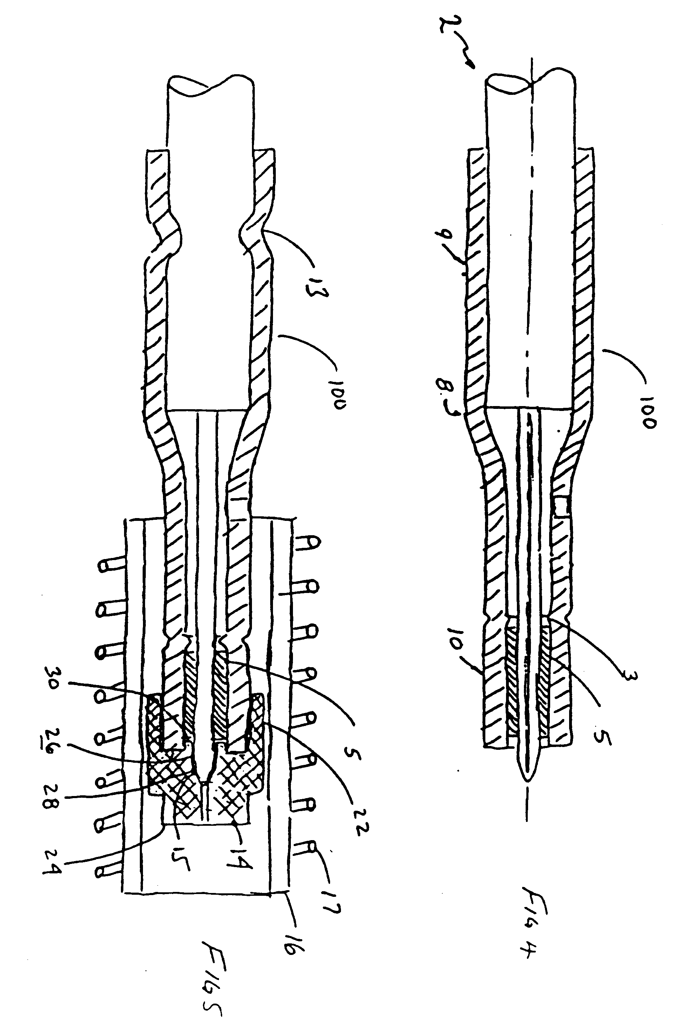

In a particularly preferred embodiment of the invention the spacer is replaced by an external centering jig, and the sleeve is modified to have sections of differing diameters as shown in Figures 2 and 3. A detailed commercial assembly procedure of a feedthrough utilizing an external centering jig is now described with reference to Figures 2 to 5, Figures 2 and 3 showing completed seals and Figures 4 and 5 showing the structure before and during heating.

A length of single or multi-mode fiber 2 to be used for the feedthrough is processed through several steps prior to forming the desired seal. The fiber 2 may be for example a "9/125" single mode fiber, the "9" representing the diameter in micrometers, of the pure glass core for transmitting light and the "125" representing the diameter, also in micrometers, of an adjacent cladding for reflecting the light which is transmitted through the core. This type of fiber also has an inner buffer of silicone or acrylate over the cladding layer which in turn is coated with an outer buffer of nylon or Hytrel (Trademark) polyester elastomer. The first process step is to strip the outer and inner buffer layers to expose a bare optical fiber with its reflective cladding.

This bare optical fiber is cleaned in trichloroethylene and then placed in an electric discharge arc and pulled in a controlled fashion to form an integral lensed end. The lensed optical fiber is then cleaned with methanol and allowed to dry in the open atmosphere.

The metal sleeve 1 is formed with two inside diameters, a large diameter end 9 that is large enough to slide over the outer buffer of the optical fiber 2 and a smaller inside diameter end 10 that is formed to within twenty-five micrometers of the outside diameter of the preform 5, which is essentially a short length of capillary. The metal sleeve 1 has an annulus, or several segmented dimples 3 integrally formed on the inside of the small diameter portion of the sleeve on to which one end of the glass capillary preform 5 locates. Prior to insertion of the fiber and preform the sleeve is cleaned in trichloroethylene for several minutes, ultrasonically cleaned in soapy water at 37°C for two minutes, rinsed in deionized water, finish cleaned in methanol and blown dry with nitrogen.

The glass preform capillary 5 is made from lead borate solder glass. The inside diameter of the capillary is formed to within twenty-five micrometers of the bare optical fiber outside diameter. The capillary is polished to remove paraffin, a residual contaminant that is deposited on the capillary during the glass sawing operation employed to cut the capillary to the desired length and is then cleaned with methanol and blown dry with nitrogen.

The absence of foreign contaminants is important in making the seal. If there are any organic materials present which could go through a phase change at elevated temperatures during sealing, such as the aforementioned paraffin, the lead present in the glass capillary material could be reduced and caused to precipitate and prevent an acceptable seal from forming.

The lensed end of the bare optical fiber is inserted into the large diameter end 9 of the metal sleeve 1 until the lens protrudes 0.020 inches from the small diameter end 10 of the sleeve. The large diameter end of the sleeve is then crimped at 13 to the outer buffer of the optical fiber by deforming the sleeve in a circumferential fashion. This fixes the axial relationship of the metal sleeve 1 and the bare optical fiber 2.

Next the glass capillary 5 is slipped over the optical fiber lens and into the metal sleeve 1 until it comes to rest on the dimples 3.

Prior to heating an axially extending positioning collar or skirt portion 22 of a thermal conduction member 14 is inserted over the reduced diameter end 10 of the fiber feedthrough assembly 100. As will be developed herein the thermal conduction member 14 serves to provide uniform heating of the glass preform 5. In addition, as may be seen from Figure 5, the thermal conduction member 14 may be formed with a closed end 24 thereon. The inner surface 26 of the closed end 24 may be provided with a centering recess 28 which is adapted to receive the projecting lensed end of the fiber 2. An annular ring 30 projects axially from the inner surface of the 26 of the closed end 24 of the member 14.

The ring 30 engages the inner surface of the reduced diameter end 10 of the sleeve 1 while the skirt portion 22 surrounds the outer surface of that same end of the sleeve 1. The thermal conduction member 14 can serve to radially center the fiber with respect to the inner diameter of the metal sleeve 1. It should be understood however that the ring 30 may be omitted, in which event the skirt portion 22, engaged against the outer surface of the sleeve 1 serves to center the fiber 2 with respect to that outer surface.

Figure 5 illustrates the optical fiber feedthrough assembly 100 as it would look during the glass capillary heating operation. The recess 28 of the closed end of the member 14 may be lubricated with a wet graphite mixture 15 to prevent the softened glass capillary from wetting to it during the heating cycle. It is then carefully slipped over the lens and on to the metal sleeve 1 in order to center the lens relative to the central axis of the metal sleeve 1, the centering bead remaining in this location until the glass capillary has cooled and hardened after the heating stage.

The centering bead is made of Kovar, which has a relatively low thermal coefficient of expansion, and when the optical fiber feedthrough assembly is heated, the sleeve expands more than Kovar bead and results in a snug fit between the sleeve and the bead. This benefits the centering operation by reducing the effect of clearance between the centering bead and metal sleeve.

4

The oven is made from a ceramic tube 16 and has an electrical heating element 17 in the form of a NICHROME® resistance wire.

The primary function of the thermal conduction member 14 is to transmit heat uniformly from the heating element into the reduced diameter end 10 of the assembly 100. This minimizes thermal gradients within the preform 5 occasioned by coiling of the wire and makes for more efficient heating of the preform 5.

Figure 6 illustrates an alternate embodiment of the thermal conduction member 14 in which the closed end portion is omitted. The skirt portion 22 surrounds the outer surface of the sleeve 1, as discussed earlier. It should be readily understood that when using this embodiment of the thermal conduction member 14 the centering of the fiber 14 with respect to the sleeve 1 must be done using the spacer 4, as discussed earlier.

Preferably the assembly is heated to a temperature approximately 90°C above the glass transition temperature of the preform for four minutes and then allowed to cool.

Different glass solders may require different heating conditions, but in general the assembly is not subjected to temperatures in excess of 600°C because the lensed tip of the optical fiber tends to crack or break off due to fiber embrittlement.

The Kovar centering bead is then removed and cleaned for reuse, and any residual graphite left on the lenses end of the feedthrough is removed with methanol.

The feedthrough is then tested for hermeticity using helium. A seal is considered hermetic if the detected leak rate does not exceed $10^{-8}$ atmospheres cubic centimeters/second Helium, MIL SPEC 883. The feedthrough as shown in Figure 2 is now complete. An alternate embodiment of this feedthrough, Figure 3, would be to back-fill the empty space inside the metal sleeve using an epoxy resin 18. This resin could be injected into the metal sleeve after sealing and hermeticity testing using a small access hole 19. The purpose of adding this material would be to structurally support that portion of the bare optical fiber from the stripped end of the inner and outer buffer to the glass capillary seal.

The materials used for the metal sleeve and the glass capillary are selected such that their thermal properties, such as their coefficients of thermal expansion and their dimension, are selected such that the stresses in the glass capillary are largely compressive. A theoretical analysis may be used to evaluate several material candidates for the sleeve and the capillary at a given set of geometric parameters and the results used to indicate those combinations estimated to have tensile rather than compressive stresses. Such an analysis is given below. It is noted that there are some approximations that make the analysis a guideline rather than exact.

The seal consists of three coaxial cylinders with differing properties. The bare optical fiber is designated as region 1, the glass capillary seal region 2, and the metal sleeve region 3; the outer radius of the optical fiber (taken as equal to the inner radius of the glass capillary seal) $r_1$, the outer radius of the glass capillary seal (taken as equal to the inner radius of the metal sleeve) $r_2$, and the outer radius of the metal sleeve $r_3$.

Each region has its own set of physical properties: modulus of elasticity E, Poisson's ratio $\nu$, and coefficient of thermal expansion $\alpha$. Each region also has its own set of physical dimensions. The dimensions selected are typical for the intended application of the feedthrough.

## TABLE I: PROPERTIES USED IN CALCULATIONS

($r_1$=62.5 micrometers; $r_2$=200 micrometers; $r_3$=300 micrometers)

| REGION | EXP. COEFF. (1.E-7/C) | PR | E(1.E7 PSI) | $T_G$(C) |
|---|---|---|---|---|
| 1. OPTICAL FIBER | | | | |
| SILICA | 5 | .16 | 1.0 | |
| 2. GLASS CAPILLARY | | | | |
| "OI" ESG 1015 GLASS | 84 | .22 | 1.0 | 408 |
| "SCHOTT" 8471 GLASS | 106 | .22 | 1.0 | 332 |
| "OI" PP-100 GLASS | 115 | .22 | 1.0 | 305 |
| "OI" PP-200 GLASS | 125 | .22 | 1.0 | 290 |
| 3. METAL SLEEVE | | | | |
| KOVAR® ALLOY METAL | 52.2 | .30 | 2.0 | |
| 52-ALLOY | 97.2 | .30 | 2.4 | |
| 1010 STEEL | 151.0 | .30 | 2.9 | |
| 304L STAINLESS STEEL | 182.0 | .30 | 2.8 | |

EXP. COEFF. = Linear thermal expansion coefficient

PR = Poisson's ratio ($v$) (value estimated)

E = Young's modulus (value estimated)

$T_G$ = Glass transition temperature

"OI" = Products available from Owens-Illinois, Inc.

"SCHOTT" = Schott Glaswerke, Marinz, Fed. Rep. of Germany

KOVAR® = Trademark of Westinghouse Electric Corp. an alloyed metal having 17% cobalt, 29% nickel, 0.2% silica, 0.3% manganese, 0.2% carbon, remainder iron

"52-ALLOY" = a metal alloy of 51% nickel and 49% iron

"1010" = .1% carbon steel

"304L" = a weldable stainless steel, 19% chromium, 10% nickel, remainder iron

The two-layer composite cylinder was analyzed by G.E. Redston and J.E. Stanworth, (J. Soc. Glass Technol., 29 [132] 48-76, 1945) and the generalized multilayer cylinder was discussed by A. Varshneya, ("Treatise on Materials Science and Technology, Vol. 22, Glass III", pp. 241-306, eds. M. Tomozawa and R.H. Doremus, Academic Press, NY, 1982). The solution is obtained as follows:

The constitutive equations relating stress to strain for an elastic material, in polar coordinates, (S.P. Timoshenko and J.N. Goodier, Theory of Elasticity, page 444, 3d Ed. McGraw-Hill Book Co., NY, 1970), are:

$\epsilon_r = \epsilon_f + E^{-1} [\sigma_r - \nu (\sigma_\theta + \sigma_z)]$  (1)

$\epsilon_\theta = \epsilon_f + E^{-1} [\sigma_\theta - \nu (\sigma_r + \sigma_z)]$  (2)

$\epsilon_z = \epsilon_f + E^{-1} [\sigma_z - \nu (\sigma_r + \sigma_\theta)]$  (3)

wherein $\epsilon_r$, $\epsilon_\theta$, $\epsilon_z$ are the radial,
circumferential (or hoop), and axial strains; $\sigma_r$, $\epsilon_\theta$, $\epsilon_z$ are the respective stresses; E is Young's modulus; $\nu$ is Poisson's ratio; and $\epsilon_f$ is the free strain,

$$\epsilon_f = \alpha \, \Delta T \qquad (4)$$

where $\alpha$ is the linear thermal expansion coefficient and $\Delta T$ is the temperature change (negative when cooling). The strains are defined in terms of the radial displacement, u, as

$$\epsilon_r = du/dr \qquad (5)$$
$$\epsilon_\theta = u/r \qquad (6)$$

where r is the radial coordinate. Using equations (1) - (6) it can be shown that the stress distribution in a cylinder has the form:

$$\sigma_{rn} = A_n - B_n/r^2 \qquad (7)$$
$$\sigma_{\theta n} = A_n + B_n/r^2 \qquad (8)$$
$$\sigma_{zn} = C_n \qquad (9)$$

where $A_n$, $B_n$, and $C_n$ are constants. A different set applies for each previously defined region: n = 1, 2, and 3. The stresses must be finite at r = 0, so equations (7) and (8) imply that $B_1$ must be zero. This leaves eight constants to be determined using the following boundary conditions:

1) The displacements must match at the boundaries of the regions (the layers do not separate or interpenetrate), so

$$u_1(r_1) = u_2(r_1) \qquad (10)$$
$$u_2(r_2) = u_3(r_2) \qquad (11)$$

2) The radial stresses must match at the boundaries of the regions to preserve equilibrium of forces

$$\sigma_{r1}(r_1) = \sigma_{r2}(r_1) \qquad (12)$$
$$\sigma_{r2}(r_2) = \sigma_{r3}(r_2) \qquad (13)$$

3) There can be no net force over the end of the cylinder, since a net force would cause acceleration

$$\int_0^{r_3} \sigma_z r \, dr = 0 \qquad (14)$$

4) Similarly, there can be no net force normal to the lateral surface

$$\sigma_{r3}(r_3) = 0 \qquad (15)$$

5) The axial strains must match, since the regions cannot slide past one another

$$\epsilon_{z1} = \epsilon_{z2} \qquad (16)$$
$$\epsilon_{z2} = \epsilon_{z3} \qquad (17)$$

These conditions provide eight equations that fix the values of the eight constants $A_n$, $B_n$, and $C_n$.
The conditions can be expressed as eight simultaneous linear equations, which after selecting known values for $E_n$, $\nu_n$ and $\epsilon_{fn}$ can be solved numerically using a computer.

This analysis assumes that the materials are elastic, whereas the hot glass capillary is actually viscolastic, (G.W. Schrerer, Relaxations in Glass and Composites, John Wiley & Sons, NY, 1986). Therefore these results should not be regarded as exact, but as estimates (and as such are probably conservative) from which the following guidelines for material choice can be prepared, based on the physical dimensions for these members as earlier set forth.

Table II shows the stresses at the fiber-glass interface for various capillary and sleeve materials.

## TABLE II: CALCULATED STRESSES $(1 \times 10^3 \text{PSI})$
## AT FIBER-GLASS CAPILLARY INTERFACE

| Glass | Metal | $\sigma_{r2}$ $(r_1)$ | $\sigma_{\theta 2}$ $(r_1)$ | $\sigma_{z2}$ $(r_1)$ |
|---|---|---|---|---|
| OI ESG 1015 | KOVAR | -10.7 | 25.6 | 13.0 |
| | 52 ALLOY | -20.7 | 13.7 | -4.9 |
| | 1010 | -35.5 | -3.9 | -29.0 |
| | 304L STAIN-LESS STEEL | -43.2 | -13.0 | -42.1 |
| SCHOTT | KOVAR | -8.7 | 28.9 | 17.4 |
| | 52 ALLOY | -16.3 | 19.8 | 3.5 |
| | 1010 | -27.8 | 6.3 | -15.4 |
| | 304L STAIN-LESS STEEL | -34.0 | -1.1 | -26.0 |
| OI PP-100 | KOVAR | -8.1 | 29.5 | 18.5 |
| | 52 ALLOY | -14.8 | 21.4 | 5.9 |
| | 1010 | -25.0 | 9.2 | -11.1 |
| | 304L STAIN-LESS STEEL | -30.7 | 2.4 | -20.8 |
| OI PP-200 | KOVAR | -7.7 | 31.2 | 20.3 |
| | 52 ALLOY | -13.9 | 23.7 | 8.5 |
| | 1010 | -23.4 | 12.4 | -7.5 |
| | 304L STAIN-LESS STEEL | -28.9 | 5.9 | -16.6 |

## POSITIVE VALUES INDICATE TENSION, NEGATIVE COMPRESSION, $(1 \times 10^3 \text{PSI})$

Of the combinations listed above three pairs of glass preform and sleeve materials result in a structure in which all three stress components are in compression, viz., 1) OI ESG 1015 glass capillary and 1010 steel sleeve; 2) OI ESG 1015 glass and stainless steel sleeve; and 3) Schott glass and stainless steel sleeve. The second of the three above listed combinations is the preferred combination of materials for the physical dimensions set out in TABLE I. Stainless steel is preferred for the ease of weldability that it imparts to the structure of the feedthrough assembly.

It should be noted from foregoing that a suitable sealing interface may be defined between the sleeve and the preform whether or not the material used to form the sleeve is wettable by the glass of the preform. The 1010 sleeve is wettable by the glass. The stainless steel sleeve is not. By "sealing interface" it is meant that a hermetic seal is defined between two members having a stability leak rate of less than $10^{-8}$ atmospheres cubic centimeters/second Helium.

The equations were further used to determine the minimum guideline value of thermal expansion coefficient for the metal sleeve at the listed dimensions to yield a compressive hoop stress with OI ESG 1015, and the result was $1.30 \times 10^{-5}/°\text{C}$. This thermal expansion coefficient indicates suitability of many copper alloys as well as several stainless steel compositions.

All of the foregoing, it is emphasized, holds only for the physical dimensions above discussed. The analysis also shows that variation in the dimension of the metal sleeve may result in a given combination of sleeve and glass capillary exhibiting the desired compressive stresses. For example, Tables III and IV illustrate the results for a stainless steel sleeve and PP-100 glass when the inner radius $r_2$ and the outer radius $r_3$ of the sleeve are varied.

## TABLE III

**Glass PP-100**

**Metal Sleeve Stainless Steel**

$r_1$ = 62.5 micrometers; $r_3$ = 300 micrometers

| $r_2$ (micrometers) | $\sigma_r$ | $\sigma_\theta$ | $\sigma_z$ |
|---|---|---|---|
| 125 | −36.1 | −3.5 | −26.0 |
| 150 | −34.3 | −1.7 | −24.6 |
| 175 | −32.6 | .3 | −22.9 |
| 200 | −30.7 | 2.4 | −20.8 |
| 225 | −28.5 | 5.0 | −18.0 |
| 250 | −25.7 | 8.3 | −14.1 |

**POSITIVE VALUES INDICATE TENSION,**

**NEGATIVE COMPRESSION, ($1 \times 10^3$ PSI)**

## TABLE IV

$r_1$ = 62.5 micrometers; $r_3$ = 400 micrometers

| $r_2$ (micrometers) | $\sigma_r$ | $\sigma_\theta$ | $\sigma_z$ |
|---|---|---|---|
| 125 | −37.2 | −5.0 | −27.2 |
| 150 | −36.0 | −3.6 | −26.4 |
| 175 | −34.9 | −2.4 | −25.5 |
| 200 | −33.9 | −1.2 | −24.5 |
| 225 | −32.8 | .1 | −23.4 |
| 250 | −31.5 | 1.5 | −22.0 |

**POSITIVE VALUES INDICATE TENSION,**

**NEGATIVE COMPRESSION, ($1 \times 10^3$ PSI)**

As is seen from TABLE III by decreasing $r_2$ from 200 micrometers to 175 micrometers the tensile hoop stress $\sigma_\theta$ decreases (from 2400 PSI to 300 PSI). The benefit of this is twofold: 1) Tensile stresses which influence increase the susceptibility of the glass capillary to the formation and subsequent propagation of cracks are significantly eliminated; 2) The process temperature (90°C plus glass transition temperature $T_G$) is reduced from 498°C for ESG 1015 glass to 395°C for PP100 (See TABLE I) which reduces the tendency of fiber embrittlement at elevated temperature. Due to the approximations which make the analysis a guideline rather than exact, as used herein the term "largely compressive" when relating to residual stresses should be construed to include those stresses that appear in the Table as slightly tensile. For example as may be seen with reference to TABLE III for $r_2$ equal to 175 micrometers $\sigma_\theta$ is shown as slightly tensile (300 PSI stress) yet an acceptable seal is produced. Further, as may be seen with reference to TABLE IV when $r_2$ equals 225 micrometers $\sigma_\theta$ is shown as slightly tensile (100 PSI stress) yet an acceptable seal may be produced. As a result, in accordance with the present invention a seal is provided in which the susceptibility of crack propagation is limited. The same physical mechanism is believed to also prevent the formation of cracks. It is noted that the presence of gold plating on the metal sleeve may slightly increase process temperature.

The major benefit of having the glass capillary totally in compression is that the formation of seal cracks due to tensile stresses is minimized. This eliminates the need to concern oneself with predicting the propagation rate of glass cracks, regardless of whether they are axial, circumferential or radial, in this type of application. The result is an optical fiber feedthrough of rigid construction having excellent long term hermetic properties.

## Claims

1. An optical fibre feedthrough (100) comprising a metallic sleeve (1), an optical fibre (2) in the sleeve (1) and a glass seal (5) between the optical fibre (2) and the sleeve (1) forming a fibre to glass sealing interface (5) at the fibre (2) surface and a glass to metal sealing interface at the inner surface of the sleeve (1), characterised in that:
   the materials and dimensions of the glass seal (5) and the metallic sleeve (1) are selected to have predetermined thermal expansion properties such that after heating the assembly (100) to a predetermined temperature and then cooling to form as sealing interfaces any residual stresses in the glass seal (5) in the radial, circumferential, and axial directions are largely compressive, thereby limiting the susceptibility of the glass seal (5) to the propagation of cracks.

2. An optical fibre feedthrough (100) as claimed in claim 1 incorporating an internal spacer (4) for maintaining a fixed spatial relationship between the fibre (2) and the sleeve (1).

3. An optical fibre feedthrough as claimed in either of claims 1 and 2 in which the fibre (2) has a lensed end and is concentrically disposed within the metallic sleeve (1).

4. An optical fibre feedthrough as claimed in any preceding claim in which the metal sleeve (1) has a coefficient of thermal expansion of at least $12 \times 10^{-6}$ per $^\circ$C.

5. An optical fibre feedthrough as claimed in any one of claims 1 to 4 in which the fibre (2) comprises silica.

6. An optical fibre feedthrough as claimed in any one of claims 1 to 4 in which the fibre (2) comprises fluoride.

7. A method of forming an optical fibre feedthrough comprising threading an optical fibre (2) through a sleeve (1), disposing a sufficient quantity of glass solder (5) with a lower glass transition temperature than the fibre (2) in at least a portion of the sleeve (1) and heating the glass solder (5) so that it forms a glass seal (5) having a glass to fibre sealing interface (5) at the fibre surface and a glass to metal interface at the surface of the sleeve (1), characterised in that:
   the materials and dimensions of the glass seal (5) and metallic sleeve (1) are selected to have predetermined thermal expansion properties such that after heating the assembly (100) to a predetermined temperature and then cooling to form the sealing interfaces any residual stresses in the glass seal (5) in the radial, circumferential, and axial directions are largely compressive, thereby limiting the susceptibility of the glass seal (5) to the propagation of cracks.

8. A method according to claim 7 including the step of locating the fibre on a spacer to maintain a fixed spatial relationship between the fibre (2) and the sleeve (1) as the glass seal (5) is formed.

9. A method as claimed in claim 8 in which the spacer (4) comprises a member threaded on the fibre (2).

EP 0 274 222 B1

**10.** A method as claimed in any one of claims 7 to 9 including the step of locating the fibre end in a centring jig and locating the end of the sleeve (1) proximate the end within an annulus on the jig that has a lower coefficient of thermal expansion than the sleeve (1) so that during heating the sleeve (1) expands sufficiently to reduce circumferential clearance between the sleeve (1) and the annulus and any eccentricity between the annulus and the sleeve (1) is minimised by permitting radial movement of the sleeve (1) within the annulus.

**11.** A method as claimed in any one of claims 7 to 10 in which the glass solder is introduced into the assembly (100) as a glass capillary member (5).

**12.** A method according to claim 7 further comprising:
a) stripping a predetermined length of the inner and outer buffer layer from an optical fibre (2) to form a stripped and buffered portion thereon;
b) positioning a glass capillary member around the fibre (2) and within the sleeve (1) so that the glass capillary (5) rests against a constriction (3) in the sleeve (1) and the end of the fibre (2) protrudes a predetermined distance beyond the end of the sleeve (1);
c) coating a central depression formed in a centring bead with a lubricant, the centring bead having a positioning collar thereon;
d) placing the centring bead over the protruding end of the fibre (2) such that the position collar extends down and over the metal sleeve (1); and
e) heating the assembly form by the preceding steps a) through d) to a temperature above the glass transition temperature of the glass capillary member (5) without exceeding 600°C for approximately four minutes and thereafter cooling the assembly (100).

**13.** A method as claimed in claim 12 wherein the assembly (100) is heated to a temperature approximately 90°C above the glass transition temperature.

**14.** A method forming an optical fibre feedthrough assembly as claimed in claim 7 further comprising:
a) stripping a predetermined length of the inner and outer buffer layer from an optical fibre (2);
b) inserting the fibre (2) into a metal sleeve (1) and centring the fibre (2) with respect thereto;
c) positioning a glass capillary member (5) around the fibre (2) and within the sleeve (1) so that the end of the fibre (2) protrudes a predetermined distance beyond the end of the sleeve (1); and
d) heating the assembly formed by the preceding steps a) to c) to a temperature above the glass transition temperature of the glass capillary member without exceeding 500°C for four minutes.

**15.** A method as claimed in any one of claims 7 to 14 in which the fibre (2) comprises silica.

**16.** A method as claimed in any one of claims 7 to 14 in which the fibre (2) comprises fluoride.

**Patentansprüche**

**1.** Optische Faserdurchführung (100), welche eine metallische Hülle (1), eine optische Faser (2) in der Hülle (1) und eine Glasdichtung (5) zwischen der optischen Faser (2) und der Hülle (1) aufweist, wobei eine Faser/Glas-Abdichtschnittstelle (5) an der Faseroberfläche und eine Glas/Metall-Abdichtschnittstelle an der inneren Oberfläche der Hülle (1) gebildet wird,
**dadurch gekennzeichnet,** daß
die Materialien und Dimensionen der Glasdichtung (5) und der metallischen Hülle (1) so ausgewählt sind, daß sie vorbestimmte thermische Ausdehnungseigenschaften haben, damit nach einer Erwärmung der Anordnung (100) auf eine vorbestimmte Temperatur und folgendem Abkühlen mm Ansbilden der Abdichtschnittstellen jegliche Restspannungen in der Glasdichtung (5) in der radialen, der Umfangs- und axialen Richtung zum größten Teil kompressiv sind, wodurch die Neigung der Glasdichtung (5) zur Rißausbreitung begrenzt wird.

**2.** Optische Faserdurchführung (100) nach Anspruch 1, welche einen internen Abstandshalter (4) beinhaltet zum Aufrechterhalten einer festen räumlichen Beziehung zwischen der Faser (2) und der Hülle (1).

**3.** Optische Faserdurchführung nach Anspruch 1 oder 2, bei welcher die Faser (2) ein als eine Linse ausgebildetes Ende hat und innerhalb der metallischen Hülle (1) konzentrisch angeordnet ist.

11

**4.** Optische Faserdurchführung nach einem der vorhergehenden Ansprüche, bei welcher die metallische Hülle (1) einen thermischen Ausdehnungskoeffizienten von zumindest $12 \times 10^{-6}$ pro °C hat.

**5.** Optische Faserdurchführung nach einem der Ansprüche 1 bis 4, bei welcher die Faser (2) Siliciumdioxid aufweist.

**6.** Optische Faserdurchführung nach einem der Ansprüche 1 bis 4, in welcher die Faser (2) Fluorid aufweist.

**7.** Verfahren zum Bilden einer optischen Faserdurchführung, welches die folgenden Schritte aufweist: Durchfädeln einer optischen Faser (2) durch eine Hülle (1), Anordnen einer Menge von Glaslötmasse (5) mit einer tieferen Glasübergangstemperatur als die Faser (2) an zumindest einem Abschnitt der Hülle (1) und Erwärmen der Glaslötmasse (5), so daß sie eine Glasdichtung (5) bildet, welche eine Glas/Faser-Abdichtschnittstelle (5) an der Faseroberfläche und eine Glas/Metall-Schnittstelle an der Oberfläche der Hülle (1) hat,
**dadurch gekennzeichnet,** daß
die Materialien und Dimensionen der Glasdichtung (5) und metallischen Hülle (1) so ausgewählt werden, daß sie vorbestimmte thermische Ausdehnungseigenschaften haben, damit nach einer Erwärmung der Anordnung (100) auf eine vorbestimmte Temperatur und nachfolgendem Abkühlen zum Ausbilden der Abdichtschnittstellen jegliche Restspannungen in der Glasdichtung (5) in der radialen, Umfangs-und axialen Richtung größtenteils kompressiv sind, wodurch die Neigung der Glasdichtung (5) zur Ausbreitung von Rissen begrenzt wird.

**8.** Verfahren nach Anspruch 7, welches den Schritt des Positionierens der Faser an einem Abstandshalter aufweist, um eine feste räumliche Beziehung zwischen der Faser (2) und der Hülle (1) aufrechtzuerhalten, während die Glasdichtung (5) gebildet wird.

**9.** Verfahren nach Anspruch 8, bei welchem der Abstandshalter (4) ein auf die Faser (2) gefädeltes Element aufweist.

**10.** Verfahren nach einem der Ansprüche 7 bis 9, welches den Schritt aufweist, das Faserende in einem Zentrierkaliber zu positionieren und das Ende der Hülle (1) nahe dem Ende innerhalb eines Kreisringes an dem Kaliber zu positionieren, welcher einen niedrigeren thermischen Expansionskoeffizienten als die Hülle (1) hat, so daß während dem Erwärmen sich die Hülle (1) ausreichend ausdehnt, um den Freiraum entlang des Umfanges zwischen der Hülle (1) und dem Krieisring zu verringern und damit jegliche Exzentrizität zwischen dem Kreisring und der Hülle (1) minimiert wird, indem man eine radiale Bewegung der Hülle (1) innerhalb des Kreisrings zuläßt.

**11.** Verfahren nach einem der Ansprüche 7 bis 10, bei dem die Glaslötmasse in die Anordnung (100) als ein Glaskapillarelement (5) eingeführt wird.

**12.** Verfahren nach Anspruch 7, welches die weiteren Schritte aufweist:
a) Abstreifen einer vorbestimmten Länge der inneren und äußeren Faserhüllenschicht von einer optischen Faser (2), um einen abgestreiften mit Faserhülle versehenen Abschnitt daran auszubilden;
b) Positionieren eines Glaskapillarelementes um die Faser (2) und innerhalb der Hülle (1), so daß die Glaskapillare (5) an einer Verengung (3) in der Hülle (1) anliegt und das Ende der Faser (2) um einen vorbestimmten Abstand über das Ende der Hülle (1) hinaus übersteht;
c) Überziehen einer in einer Zentrierperle ausgebildeten zentralen Vertiefung mit einem Gleitmittel, wobei die Zentrierperle einen darin ausgebildeten Positionierkragen hat;
d) Plazieren der Zentrierperle über das vorstehende Ende der Faser (2), so daß sich der Positionierkragen nach unten und über die metallische Hülle (1) erstreckt; und
e) Erwärmen der Anordnungsform durch die vorhergehenden Schritte a) bis d) auf eine Temperatur oberhalb der Glasübergangstemperatur des Glaskapillarelementes (5) für ungefähr 4 Min., ohne daß 600 °C überschritten werden, und daraufhin Abkühlen der Anordnung (100).

**13.** Verfahren nach Anspruch 12, wobei die Anordnung (100) auf eine Temperatur ungefähr 90 °C oberhalb der Glasübergangstemperatur erwärmt wird.

**14.** Verfahren zum Ausbilden einer optischen Faserdurchführungsanordnung nach Anspruch 7, welches weiterhin die folgenden Schritte aufweist:

a) Abstreifen einer vorbestimmten Länge der inneren und äußeren Faserhüllenschicht von einer optischen Faser (2);

b) Einführen der Faser (2) in eine metallische Hülle (1) und Zentrieren der Faser (2) mit Bezug dazu;

c) Positionieren eines Glaskapillarelementes (5) um die Faser (2) herum und innerhalb der Hülle (1), so daß das Ende der Faser (2) um einen vorbestimmten Abstand über das Ende der Hülle (1) übersteht; und

d) Erwärmen der durch die vorhergehenden Schritte a) bis c) ausgebildeten Anordnung auf eine Temperatur oberhalb der Glasübergangstemperatur des Glaskapillarelementes für 4 Min., ohne daß man 500 °C überschreitet.

**15.** Verfahren nach einem der Ansprüche 7 bis 14, in welchem die Faser (2) Siliciumdioxid aufweist.

**16.** Verfahren nach einem der Ansprüche 7 bis 14, bei welchem die Faser (2) Fluorid aufweist.

**Revendications**

**1.** Une traversée (100) pour fibre optique comprenant un manchon métallique (1), une fibre optique (2) située dans le manchon (1), et un joint étanche (5) en verre, situé entre la fibre optique (2) et le manchon (1), formant une interface (5) d'étanchéité fibre sur verre à la surface de fibre (2) et une interface d'étanchéité verre sur métal à la surface intérieure du manchon (11), caractérisée en ce que :

les matières et les dimensions du joint en verre (5) et du manchon métallique (1) sont choisies pour posséder des propriétés prédéterminées de dilatation thermique telles que, après un chauffage de l'ensemble (11) à une température prédéterminée et ensuite un refroidissement pour former les interfaces d'étanchéité, toutes contraintes résiduelles dans le joint en verre (5), dans les directions radiale circonférentielle et axiale, sont en majeure partie des contraintes de compression, ce qui limite la susceptibilité du joint en verre (5) à la propagation de fissures.

**2.** Une traversée (100) pour fibre optique selon la revendication 1 incorporant une entretoise interne (4) afin de maintenir une relation spatiale fixe entre la fibre (2) et le manchon (1).

**3.** Une traversée pour fibre optique selon l'une ou l'autre des revendications 1 et 2 dans laquelle la fibre (2) comporte une extrémité lenticulaire et est disposée de manière concentrique à l'intérieur du manchon métallique (1).

**4.** Une traversée pour fibre optique selon une revendication précédente quelconque dans laquelle le coefficient de dilatation thermique du manchon métallique (1) est d'au moins $12 \times 10^{-6}$ par °C.

**5.** Une traversée pour fibre optique selon l'une quelconque des revendications 1 à 4 dans laquelle la fibre (2) comprend de la silice.

**6.** Une traversée pour fibre optique selon l'une quelconque des revendications 1 à 4 dans laquelle la fibre (2) comprend un fluorure.

**7.** Un procédé de formation d'une traversée pour fibre optique comprenant les étapes consistant à : enfiler une fibre optique (2) à travers un manchon (1), disposer une quantité suffisante de brasure de verre (5) dont la température de transition de verre est inférieure à celle de la fibre (2) dans au moins une partie du manchon (1) et chauffer la brasure de verre (5) de façon qu'elle forme un joint en verre (5) présentant une interface d'étanchéité verre sur fibre (5) à la surface de fibre et une interface verre sur métal à la surface du manchon (1), caractérisé en ce que :

les matières et les dimensions du joint en verre (5) et du manchon métallique (1) sont choisies pour posséder des propriétés prédéterminées de dilatation thermique telles que, après un chauffage de l'ensemble (11) à une température prédéterminée et ensuite un refroidissement pour former les interfaces d'étanchéité, toutes contraintes résiduelles dans le joint en verre (5), dans les directions radiale circonférentielle et axiale, sont en majeure partie des contraintes de compression, ce qui limite la susceptibilité du joint en verre (5) à la propagation de fissures.

**8.** Un procédé selon la revendication 7 incluant l'étape consistant à disposer la fibre sur une entretoise afin de maintenir une relation spatiale fixe entre la fibre (2) et le manchon (1) lorsque le joint en verre (5) est formé.

**9.** Un procédé selon la revendication 8 dans lequel l'entretoise (4) comprend un élément enfilé sur la fibre (2).

**10.** Un procédé selon l'une quelconque des revendications 7 à 9 incluant l'étape consistant à disposer l'extrémité de la fibre dans un gabarit de centrage et à disposer l'extrémité du manchon (1) voisine de l'extrémité à l'intérieur d'un anneau du gabarit dont le coefficient de dilatation thermique est inférieur à celui du manchon (1) de façon que, pendant le chauffage, le manchon (1) se dilate suffisamment pour réduire le jeu circonférentiel entre le manchon (1) et l'anneau et que toute excentricité entre l'anneau et le manchon (1) est minimisée en permettant un déplacement radial du manchon (1) à l'intérieur de l'anneau.

**11.** Un procédé selon l'une quelconque des revendications 7 à 10 dans lequel la brasure de verre est introduite dans l'ensemble (10) en tant qu'élément capillaire en verre (5).

**12.** Un procédé selon la revendication 7 comprenant en outre les étapes consistant à :
a) enlever une longueur prédéterminée des couches de tampon intérieure et extérieure d'une fibre optique (2) afin de former sur celle-ci une partie dénudée et tamponnée;
b) positionner un élément capillaire en verre autour de la fibre (2) et à l'intérieur du manchon (1) d'une manière telle que le capillaire en verre (5) repose contre une constriction (3) dans le manchon (1) et que l'extrémité de la fibre (2), fasse saillie d'une distance prédéterminée au-delà de l'extrémité du manchon (1);
c) revêtir d'un lubrifiant une dépression centrale ménagée dans une pastille de centrage, la pastille de centrage portant une collerette de positionnement;
d) placer la pastille de centrage au-delà de l'extrémité en saillie de la fibre (2) d'une manière telle que la collerette de positionnement s'étende vers le bas au-dessus du manchon métallique (1); et
e) chauffer environ quatre minutes l'ensemble formé par les étapes précédentes a) à d) à une température supérieure à la température de transition de verre de l'élément capillaire en verre (5) sans dépasser 600°C, et refroidir ensuite l'ensemble (100).

**13.** Un procédé selon la revendication 12 dans lequel l'ensemble (100) est chauffé à une température dépassant d'environ 90°C la température de transition du verre.

**14.** Un procédé de formation d'un ensemble de traversée pour fibre optique selon la revendication 7 comprenant en outre les étapes consistant à :
a) dénuder une longueur prédéterminée des couches de tampon intérieure et extérieure d'une fibre optique (2);
b) insérer la fibre (2) dans un manchon métallique (1) et centrer la fibre (2) par rapport à celui-ci;
c) positionner un élément capillaire en verre (5) autour de la fibre (2) et à l'intérieur du manchon (1) de façon que l'extrémité de la fibre (2) fasse saillie d'une distance prédéterminée au-delà de l'extrémité du manchon (1); et
d) chauffer quatre minutes l'ensemble formé par les étapes précédentes a) à c) à une température supérieure à la température de transition du verre de l'élément capillaire en verre sans dépasser 500°C.

**15.** Un procédé selon l'une quelconque des revendications 7 à 14 dans lequel la fibre (2) comprend de la silice.

**16.** Un procédé selon l'une quelconque des revendications 7 à 14 dans lequel la fibre (2) comprend un fluorure.

EP 0 274 222 B1

FIG. 1

FIG. 2

FIG. 3

EP 0 274 222 B1

FIG 5

FIG 4

16

FIG 6